Europäisches Patentamt

European Patent Office

Office européen des brevets

(19)

(11) **EP 0 921 409 B1**

(12) **FASCICULE DE BREVET EUROPEEN**

(45) Date de publication et mention
de la délivrance du brevet:
**16.03.2005 Bulletin 2005/11**

(51) Int Cl.$^7$: **G01S 1/04**

(21) Numéro de dépôt: **98402832.4**

(22) Date de dépôt: **16.11.1998**

(54) **Récepteur GPS bi-fréquence, opératoire sur toutes les mesures en présence d'encryptage**

Doppelfrequenz-GPS-Empfänger zum Betrieb bei Verschlüsselung

Dual frequency GPS receiver, operating under encryption conditions

(84) Etats contractants désignés:
**BE DE GB NL**

(30) Priorité: **03.12.1997 FR 9715236**

(43) Date de publication de la demande:
**09.06.1999 Bulletin 1999/23**

(73) Titulaire: **Thales Navigation S.A.**
**44474 Carquefou (FR)**

(72) Inventeur: **Bourasseau, Daniel**
**44000 Nantes (FR)**

(74) Mandataire: **Plaçais, Jean-Yves et al**
**Cabinet Netter,**
**36, avenue Hoche**
**75008 Paris (FR)**

(56) Documents cités:
**WO-A-97/14052          US-A- 5 535 278**

- **HOFMANN-WELLENHOF, B. ET AL: "Global Positioning System, Theory and Practice" avril 1994 , SPRINGER-VERLAG , WIEN; 3RD, REVISED EDITION XP002076060 * page 84, ligne 6 - page 87, ligne 12; tableau 5.5 ***

**EP 0 921 409 B1**

**Description**

L'invention concerne les systèmes de navigation du genre GPS ou GLONASS.

Dans ces systèmes, des satellites émettent des ondes porteuses marquées temporellement par des codes pseudo-aléatoires. Les fréquences porteuses et les codes sont définies à partir d'une même horloge de référence.

A la réception, le temps de propagation de l'onde se manifeste à la fois par un décalage temporel du code pseudo-aléatoire (code PRN) et par un décalage de phase de la porteuse. En présence d'un mouvement relatif sur l'axe émetteur/récepteur (ligne de visée), il s'y ajoute un décalage de fréquence de la porteuse, dû à l'effet Doppler.

Des triangulations basées sur ces temps de propagation (code et porteuse) permettent la détermination de la position du récepteur. Cela suppose de connaître l'horloge de référence d'émission, et la position des satellites sur leur trajectoire. Des informations appropriées à cet effet, dites "message de navigation", sont également transmises par les satellites. Enfin, les porteuses et les codes ayant une périodicité, il en découle généralement une ambiguïté sur la détermination de position, ambiguïté que l'on sait lever par différents moyens connus.

Des sources d'erreur existent: certaines, liées à la traversée de la troposphère ou de l'ionosphère, affectent de manière générale la vitesse de propagation des ondes; d'autres sources d'erreurs tiennent au fait que le trajet parcouru par l'onde radioélectrique jusqu'au récepteur n'est pas rectiligne, d'autres encore au fait que le récepteur perçoit une combinaison de différents trajets issus de réflexions diverses, généralement dues à des surfaces voisines de l'antenne de réception. C'est ce qu'on appelle les erreurs de trajets multiples: au trajet direct (le plus court) se superposent d'autres trajets indésirés.

Dans le système GPS, il est prévu que chaque satellite émette le même code (code P), de façon synchrone à l'émission, sur deux fréquences porteuses différentes. Dans un récepteur bi-fréquence, utilisant les signaux de ces deux porteuses, on peut donc réduire ou éliminer certaines erreurs, en particulier celles liées à l'ionosphère. La précision de la détermination de position est alors en principe nettement meilleure. En outre, la "levée d'ambiguïté" en est facilitée.

Mais l'accès à ce code P est réservé, par un brouillage qui peut lui être appliqué, et l'est souvent, à l'initiative du gouvernement des Etats-Unis.

Dans ce cas, on peut en revenir à des récepteurs "mono-fréquence", utilisant un autre code (code C/A), en principe moins précis, et non brouillé. Certaines propriétés du brouillage du code P ayant été divulguées, il est également possible, comme on le verra plus loin, de concevoir des récepteurs "bi-fréquence", utilisant partiellement le code P brouillé, noté en ce cas P(Y).

Toutefois, les récepteurs "mono-fréquence" ont fait récemment de très grands progrès. Un récepteur bi-fréquence n'a donc d'intérêt que s'il peut utiliser le code P(Y) brouillé en apportant des performances significativement supérieures à celles du récepteur mono-fréquence, en rapport avec le surcoût impliqué.

C'est là qu'intervient la présente invention.

De façon générale, un récepteur bi-fréquence comporte des moyens de réception haute fréquence, pour recevoir des signaux de radio-navigation à deux porteuses, modulées par inversion de phase par un code pseudo-aléatoire (comme le code P(Y) du GPS), et pour fournir deux sorties numériques (L1,L2), respectivement pour ces deux porteuses. Il comporte aussi un générateur de premières et secondes répliques d'un code (P) correspondant au moins partiellement audit code (P(Y)), ainsi qu'un générateur d'images locales des deux porteuses. Des moyens de corrélation effectuent des corrélations ponctuelle et différentielle, d'une part entre la première sortie numérique (L1) et les premières répliques de code, et d'autre part entre la seconde sortie numérique (L2) et les secondes répliques de code. D'autres moyens établissent ensuite des transformées quadratiques des sorties ponctuelles et différentielles des moyens de corrélation. Enfin, des moyens de traitement sont prévus pour asservir les premières et secondes répliques de code d'après lesdites sorties quadratiques différentielles, respectivement, pour asservir aussi les images des deux porteuses d'après les sorties quadratiques ponctuelles, respectivement, ainsi que pour exploiter les informations temporelles issues de ces asservissements pour déterminer la position du récepteur.

Selon un aspect de l'invention, le récepteur comporte, entre chacune des corrélations et les moyens de transformation quadratique, un filtrage passe-bas numérique, suivi d'un ré-échantillonnage. De préférence, ce ré-échantillonnage forme sur-échantillonnage de la différence (W) entre le code réel (P(Y)) et le code de base (P) des premières et secondes répliques tandis que les premières et secondes répliques sont engendrées à partir d'un même oscillateur local.

Dans le système GPS, la première desdites porteuses est en outre modulée par inversion de phase par un autre code pseudo-aléatoire (C/A), plus court. Le récepteur comporte alors en principe un générateur de répliques de cet autre code, un générateur d'une image locale de la première porteuse, ainsi que d'autres moyens de corrélation, agencés pour effectuer des corrélations ponctuelle et différentielle de la première sortie numérique (L1) avec des répliques de cet autre code (C/A). Et les moyens de traitement sont agencés pour asservir d'abord les répliques de cet autre code d'après la corrélation différentielle, ainsi que l'image de la première porteuse d'après la corrélation ponctuelle, afin de pré-positionner lesdits asservissements des premières et secondes répliques de code.

Selon un autre aspect de l'invention, les deux générateurs d'image de la première porteuse sont entièrement séparés.

En outre, les moyens d'exploitation peuvent alors être agencés pour utiliser en permanence l'ensemble des mesures observables sur la totalité des codes et des porteuses des satellites traités.

Dans un mode de réalisation avantageux, on prévoit tout ou partie des caractéristiques ci-après: les moyens de transformation quadratique comportent une intégration numérique en sortie; le filtrage passe-bas est réalisé par un filtre numérique cadencé à environ 25 MHz, suivi du ré-échantillonnage à cadence environ 10 fois moindre; le filtrage passe-bas est réalisé par un filtre numérique récursif linéaire avec écrêtage, de préférence avec pour équation récurrente:

$$y_n = y_{n-1} + k (x_n - y_{n-1})$$

où $x_n$, $y_{n-1}$ et $y_n$ sont respectivement l'échantillon d'entrée en cours, l'échantillon de sortie précédent et l'échantillon de sortie mis à jour; l'approximation du code étant le code P, et le code réel étant le code P(Y), la fréquence de coupure dudit filtrage passe-bas est d'environ 250 kHz;

la différence entre l'approximation (P) du code et le code réel P(Y) étant un code de brouillage (W) de cadence connue au moins approximativement, la cadence du ré-échantillonnage est au moins deux fois supérieure à la cadence de ce code de brouillage (W).

Selon encore un autre aspect de l'invention, les moyens de transformation quadratique sont agencés pour multiplier sélectivement chacune des sorties ponctuelles et différentielles des moyens de corrélation par l'une des deux sorties ponctuelles, de préférence par la sortie ponctuelle relative à la première porteuse.

Il résulte des différentes caractéristiques de l'invention un récepteur de constitution sophistiquée, qui est rendu économiquement accessible par une construction modulaire à plusieurs niveaux, sur laquelle on reviendra.

D'autres caractéristiques et avantages de l'invention apparaîtront à l'examen de la description détaillée ci-après, et des dessins annexés, sur lesquels:

- la figure 1 illustre le schéma partiellement détaillé (réception hautes fréquences) d'un récepteur bi-fréquence auquel s'applique la présente invention;
- la figure 2 est le schéma d'une partie du récepteur de la figure 1, détaillant le bloc 30 de la figure 1;
- les figures 3 et 4 illustrent deux détails du récepteur de la figure 2;
- la figure 5 illustre le même schéma que la figure 1, mais partiellement détaillé d'une manière différente (bloc 230);
- la figure 6 est un schéma plus détaillé du bloc 230 de la figure 5;
- les figures 7 à 10 sont les parties P7 à P10, encore plus détaillées, de la figure 6;
- la figure 11 illustre un récepteur complété pour le traitement de plusieurs satellites; et
- les figures 12A et 12B sont deux diagrammes utiles à la compréhension de l'invention.

Les dessins annexés sont, pour l'essentiel, de caractère certain. En conséquence, ils pourront non seulement servir à mieux faire comprendre la description, mais aussi contribuer à la définition de l'invention, le cas échéant.

La description détaillée ci-après vise le système GPS, sans préjudice de l'application de l'invention à d'autres systèmes, futurs ou présents, dont le système GLONASS.

Comme indiqué par exemple dans le brevet US-A-5 576 715, un satellite GPS émet :

- une porteuse notée "L1", de fréquence 1575,42 MHz, modulée comme suit:

  . sa composante "en-phase" est modulée par inversion de phase (modulation bi-phase, ou BPSK) par un code PRN public noté "C/A" (pour "Coarse Acquisition" ou "Clear Acquisition"), de période ou longueur 1023 bits et cadencé à 1,023 MHz ; et
  . sa composante "en-quadrature" est modulée en bi-phase par un code PRN public noté "P" ("Precise") plus rapide (10,23 MHz), et de très grande longueur (7 jours environ)

- une porteuse notée "L2", de fréquence 1227,60 MHz, modulée en bi-phase (BPSK) par le même code P que précédemment,
- en outre, les deux porteuses sont munies également d'une modulation lente par un train d'informations binaires à 50 Hz portant le "message de navigation".

Toutes les fréquences et cadences sont entre elles comme le rapport de deux nombres entiers. Par exemple, avec $f_0$ = 10,23 MHz, la cadence du code C/A est $f_0/10$, L1 vaut $f_0$ * 154 et L2 vaut $f_0$ * 120. Toutes les fréquences et cadences peuvent donc être tirées de la même référence de temps ($f_0$ ou autre). En bref, à l'émission, tout reste synchrone.

A l'initiative du gouvernement des Etats-Unis, le code P est susceptible d'être protégé ("anti-spoofing"), en le modulant par un code secret appelé code W. Le code encrypté qui en résulte est appelé code P(Y), souvent abrégé en code Y. Cette protection est, de fait, souvent appliquée. On a d'abord considéré qu'elle rendait le code Y inutilisable.

C'est ainsi qu'ont été construits des récepteurs GPS dits "civils", mono-fréquence, c'est à dire utilisant seulement le code C/A de la porteuse L1.

La demande de brevet français N° 97 12283, déposée le 2 octobre 1997, et intitulée "Récepteur de radionavigation perfectionné, en particulier du type GPS" vise des mesures tendant à détecter les situations de trajets multiples, entre chaque satellite et le récepteur, situations qui sont de nature à perturber la détermination de position faite dans le récepteur. Le récepteur GPS qui s'y trouve décrit est monofréquence.

On sait naturellement faire des récepteurs bi-fréquence, travaillant avec le code P(Y), pour les personnes qui ont accès au code secret W. S'est alors posée la question de l'utilisation du code P(Y), dans des récepteurs bi-fréquence, par des personnes qui n'ont pas accès à ce code secret W.

Les premières propositions ont consisté en des récepteurs bi-fréquence utilisant la porteuse L2 sans rien connaître du code P(Y) (récepteurs "codeless"). On remarque en effet que la modulation par inversion de phase disparaît lors d'une élévation au carré du signal ("squaring"). Une synchronisation sur la porteuse L2, telle que reçue, redevient possible après cette élévation au carré. Cependant, on sait que l'élévation au carré, qui double au passage les fréquences, entraîne plusieurs conséquences gênantes:

- l'apparition de pertes quadratiques, comparativement à la réception nominale d'un code connu. Ces pertes sont directement proportionnelles à la bande d'entrée, comme on le verra ci-après.
- l'ambiguïté de résolution de phase descend à un demi-tour au lieu d'un tour, ce qui double la tâche du lever d'ambiguïté.
- enfin, il peut se produire des interférences entre des signaux provenant de satellites différents. En effet, l'élévation au carré reconstitue les porteuses pures (à la fréquence double); celles-ci peuvent se trouver synchrones entre elles, et le code n'est plus là pour les distinguer.

Les pertes quadratiques augmentent de 1 dB, chaque fois que le rapport $C/N_0$ avant élévation au carré diminue de 1 dB. Ce rapport $C/N_0$ se définit comme le rapport de la puissance de la porteuse (à la réception) à la densité spectrale de bruit et se mesure en dB.Hz. On considère par exemple le cas d'une bande d'entrée de 20 MHz, avec un rapport $C/N_0$ à l'entrée de 40 dB.Hz; il en découle des pertes quadratiques de 30 dB, et, en final, un $C/N_0$ de sortie d'environ 10 dB.Hz. De même, pour une bande d'entrée de 20 MHz, avec un rapport $C/N_0$ à l'entrée de 50 dB.Hz, les pertes quadratiques sont de 20 dB, avec, en final, un $C/N_0$ de sortie d'environ 30 dB.Hz. Ces exemples montrent qu'une variation de 10 dB à l'entrée entraîne une variation de 20 dB en sortie.

Récemment, il a été relevé que le code de protection W possède une cadence d'environ 500 kHz, nettement plus faible que celle du code P, ce qui peut s'écrire:

codeY (10,23 MHz) = codeP (10,23 MHz) + codeW (500 kHz) relation dans laquelle le signe "=" désigne l'égalité modulo 2. Cette information ouvre de nouvelles possibilités.

Tout d'abord, il devient possible d'utiliser le code P, même si les signaux reçus sont du type P(Y) (notation que l'on abrège souvent en Y). Un récepteur bi-fréquence ainsi conçu fonctionne classiquement en présence du code P non brouillé. Lorsque survient le brouillage, il peut passer en mode "squaring".

Au lieu de l'élévation au carré, on peut, pour éviter le doublement de l'ambiguïté mentionné ci-dessus, faire une corrélation croisée entre les voies L1 et L2, décalées d'un retard variable que l'on va asservir.

Toutes ces solutions doivent garder une bande passante large (de l'ordre de 20 MHz pour le code Y qui est inconnu), et ceci jusqu'à la multiplication constitutive de l'élévation au carré ou de la corrélation croisée, afin de préserver la modulation utile. Il en résulte un rapport signal/bruit fortement dégradé, à proportion de la bande, comme déjà exposé.

Mais il a été observé qu'après la corrélation par le code P, les signaux reçus ont une largeur de bande réduite dans un rapport 20 environ (10,23/0,5). Il en résulte une économie de matériel, et surtout un gain de l'ordre de 13 dB (après élévation au carré ou corrélation croisée), sans parler du fait que l'on évite le brouillage en général, ainsi que les interférences de porteuse inter-satellites.

Les notions qui précèdent sont beaucoup plus délicates à mettre en oeuvre qu'à concevoir. On en trouve des applications plus ou moins complètes dans US-A-4 972 431 (KEEGAN - MAGNAVOX), US-A-5 535 278 (CAHN et al - MAGNAVOX), US-A-5 541 606 (LENNEN - TRIMBLE) ou EP-A-0 508 621 (LORENZ et al - ASHTECH).

A côté de cela, les erreurs ionosphériques ont pour effet que, partant du même satellite, le code P(Y) modulant la porteuse L2 arrive au récepteur décalé par rapport au code P(Y) modulant la porteuse L1. Le traitement de ce décalage temporel pose de sérieux problèmes, compte-tenu des asservissements qu'il faut en outre réaliser sur l'ensemble des codes et des porteuses reçus, et ceci, pour chaque satellite traité. L'exposé détaillé de ces problèmes dépasserait largement le cadre de la présente description.

On décrira maintenant un mode de réalisation de l'invention.

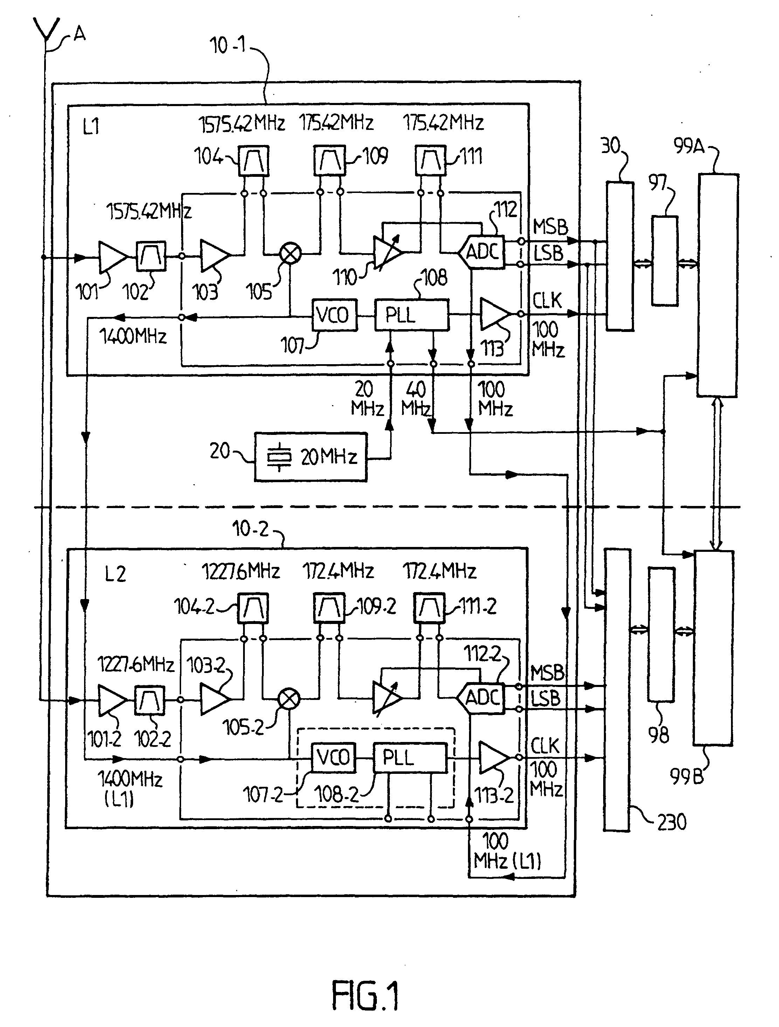

Sur la figure 1, l'antenne A est reliée à deux modules de réception 10-1 et 10-2, consacrés respectivement aux deux fréquences porteuses L1 et L2.

Pour la porteuse L1, le module 10-1 (référence globale), commence par un amplificateur d'antenne 101, suivi d'un filtre 102 accordé sur 1575.42 MHz. Le reste, sauf les éléments fréquentiels, est constitué d'un module de circuit intégré. Ce module commence par un amplificateur 103, suivi d'un filtre externe 104, accordé sur la même fréquence que le filtre 102. Vient ensuite un mélangeur 105, dont l'entrée de signal local reçoit la sortie d'un oscillateur commandé en tension (VCO) 107, travaillant à 1400 MHz, et piloté par une boucle à verrouillage de phase (PLL) 108.

Cette boucle à verrouillage de phase (PLL) 108 reçoit une référence à 20 MHz d'un quartz externe 20. On notera au passage qu'elle fournit également une sortie externe à 40 MHz (ou 50 MHz), pour piloter le processeur de traitement de signal (DSP) qui suit. Elle comporte encore une sortie interne/externe qui fournit une cadence d'échantillonnage à 100 MHz (ou 20 MHz, si telle est la cadence d'échantillonnage en aval).

La sortie du mélangeur 105 va vers un filtre externe 109, accordé sur 175,42 MHz. Sa sortie va sur un amplificateur à gain variable 110, suivi d'un autre filtre externe 111 à 175,42 MHz, et enfin d'un convertisseur analogique numérique (ADC) 112, possédant ici deux bits de sortie, notés respectivement LSB et MSB, suivant la notation habituelle. Ces signaux MSB et LSB, ainsi que la sortie de l'amplificateur 103 vont vers un module 30, chargé de l'exploitation des signaux sur la première fréquence porteuse L1.

La sortie à 100 MHz du bloc PLL 108, sert d'horloge CLK au convertisseur 112, et, dans le mode de réalisation décrit, pilote un amplificateur 113 fournissant le même signal d'horloge CLK à l'unité 30.

La sortie du module 30 ainsi que la fréquence d'horloge à 40 MHz issue de l'unité 108, vont, à travers une interface multi-canaux 97, vers un processeur DSP 99A, faisant partie d'un calculateur général 99, chargé de manière connue d'effectuer les calculs de position du récepteur. En outre, le calculateur 99 contient la majeure partie des asservissements de porteuse et de code, comme on le verra plus loin.

Les éléments mentionnés jusqu'à présent, situés tous au-dessus du trait tireté épais de la figure 1, constituent un récepteur monofréquence opérant seulement sur la fréquence porteuse L1 et sur le code C/A.

Un mode de réalisation détaillé d'un tel récepteur est décrit dans la Demande de Brevet français N° 97 12 283, déposée le 2 octobre 1997, et intitulée "Récepteur de radionavigation perfectionné, en particulier du type GPS".

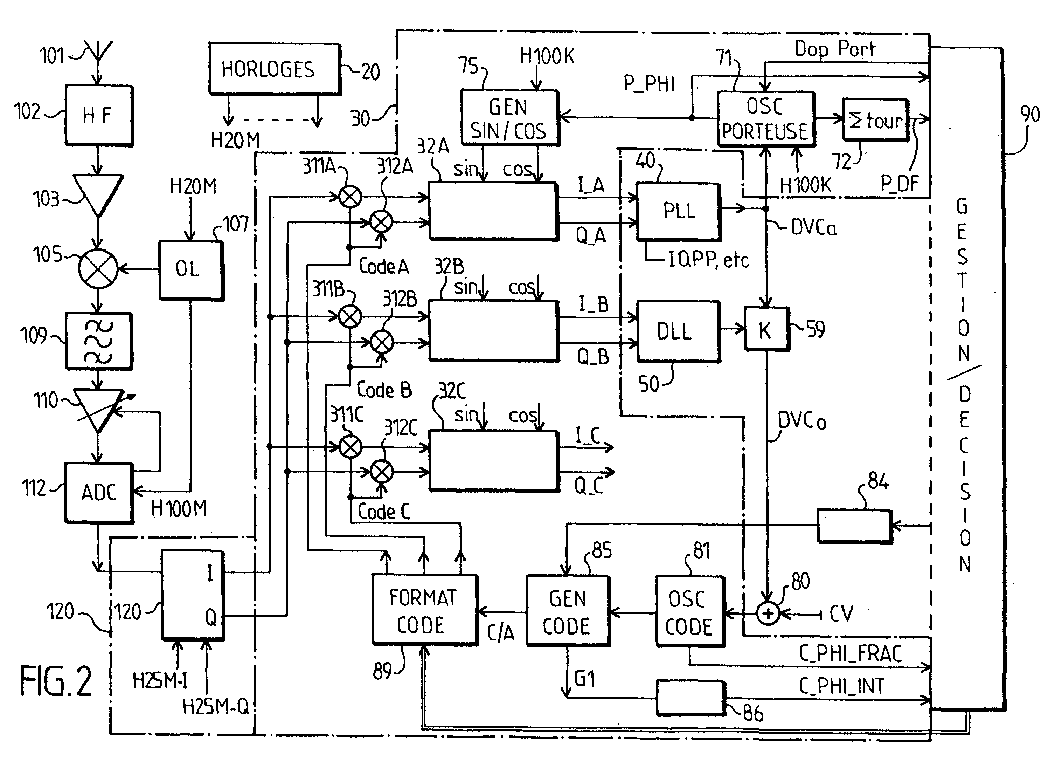

Les figures 2, 3 et 4 sont reprises de la Demande de Brevet précitée. Toutefois, la figure 2 est un schéma de principe, dans lequel ressortent des éléments relevant ici du calculateur général 99. Il est donc ajouté à la figure 2 un cadre en trait mixte, qui y délimite le module 30 de la figure 1. Dans le mode de réalisation décrit ici, ce qui est à droite de ce cadre, en particulier l'élément 40 de la boucle PLL, les éléments 50 et 59 de la boucle DLL, et l'organe 84 (une table de calage de code décrite dans FR 97 12 283) est réalisé par le processeur 99A, sous forme logicielle. Pour conserver la correspondance avec la demande de brevet antérieure, on a conservé l'unité de gestion-décision 90, à laquelle il faut ici ajouter ce qui est à droite du cadre 30. Ainsi, l'unité 90 comprend ici une interface de canal (incorporée au bloc 30), puis l'interface multi-canaux 97 pour le code C/A (interfaces non représentées sur la figure 2, pour ne pas modifier celle-ci), ainsi que le processeur DSP 99A.

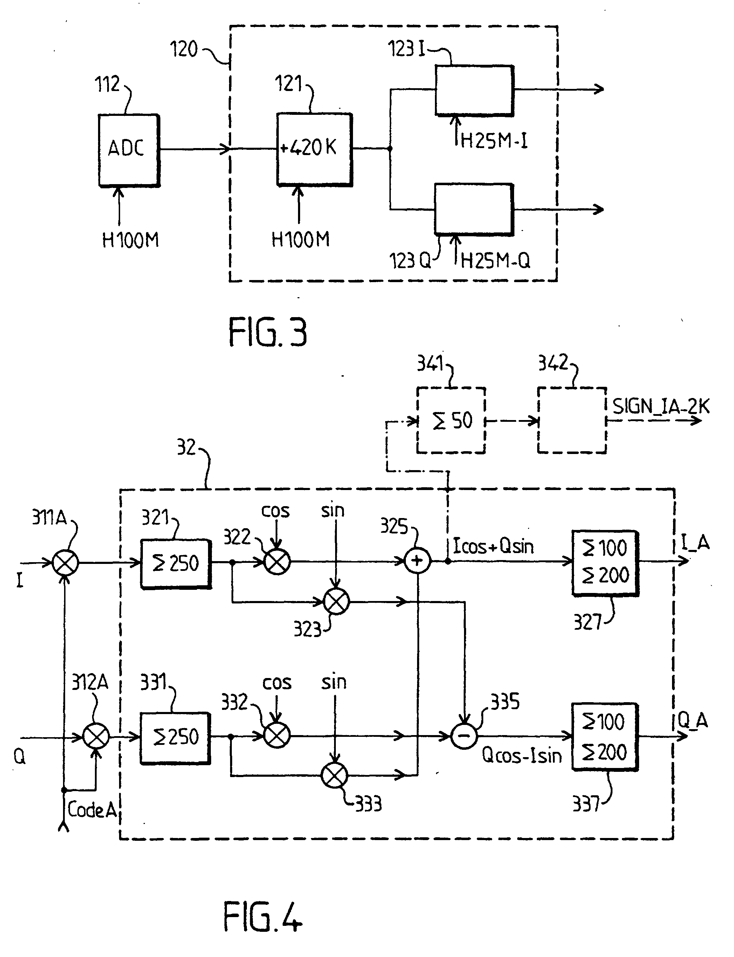

L'organe 120 de la figure 2 est détaillé sur la figure 3, avec le convertisseur 112. Le détail de chacun des circuits 32A, 32B, 32C est donné sur la figure 4, avec la référence 32.

On sait que les techniques impliquées dans le récepteur GPS sont particulièrement complexes. Par conséquent, dans le but d'alléger la présente description, il est simplement fait référence à la Demande de Brevet antérieure pour la constitution et le fonctionnement des éléments 10, 20 et surtout 30 de la figure 1. Le contenu descriptif de la Demande de Brevet français 97 12 283 est donc incorporé par référence à la présente description, dans laquelle il pourra être ré-intégré en totalité ou en partie, si besoin est.

On considère maintenant la partie basse du récepteur de la figure 1, qui le rend "bi-fréquence", puisqu'elle fait intervenir la seconde fréquence porteuse L2.

Le module 10-2 utilise un module de circuit intégré identique à celui du module 10-1, auquel il est également semblable pour le reste. Les différences portent d'une part sur les fréquences centrales des filtres 102-2, 104-2, 109-2 et 111-2, la fréquence porteuse L2 étant de 1227,6 MHz et de 1575,42 MHz pour L1. D'autre part, pour les signaux de service : il n'y a pas génération indépendante d'un signal local, et le mélangeur 105.2 reçoit exactement le même signal local à 1400 MHz que dans le circuit 10.1 ; les éléments 107.2 et 108.2 sont inactifs ; enfin, la fréquence de 100 MHz disponible en sortie de l'étage PLL 108-1 de la partie haute est simplement reprise ici comme horloge du convertisseur 112-2, et pour fournir via l'amplificateur 113-2 la sortie CLK à 100 MHz du circuit 113-2 vers l'unité 230.

Cette unité 230 reçoit non seulement les deux bits MSB et LSB en sortie du convertisseur analogique numérique 112-2, mais aussi les deux bits MSB et LSB en sortie du convertisseur analogique numérique 112-1 du module 10-1.

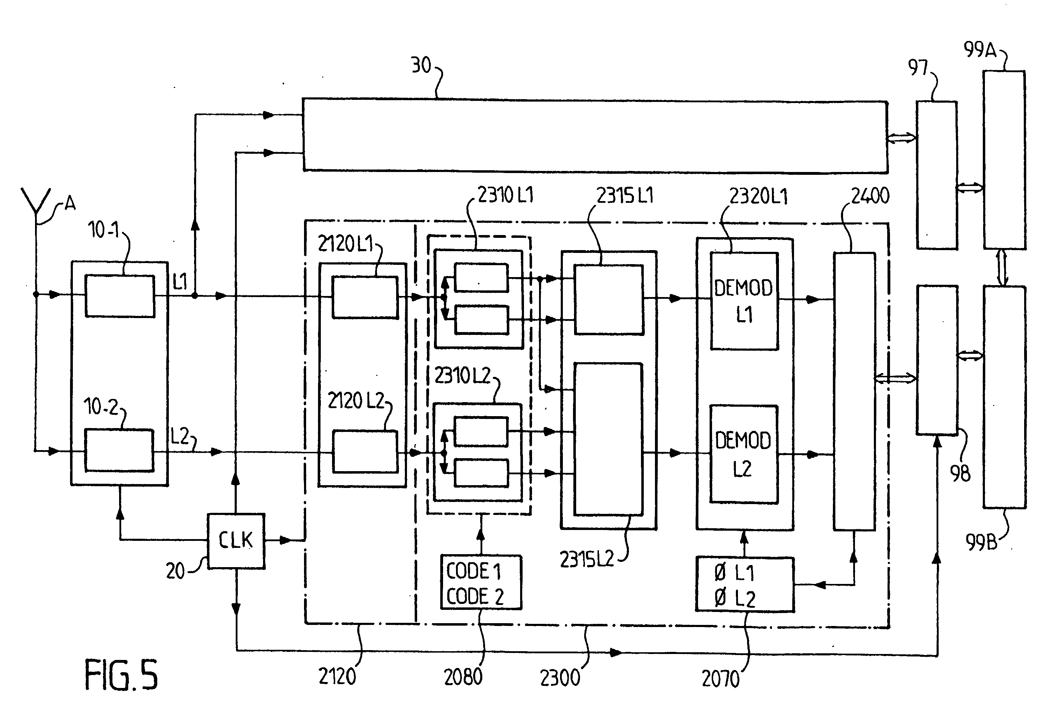

La figure 5 illustre un autre schéma général du récepteur bi-fréquence selon l'invention. Alors que la figure 1 détaillait les modules 10-1 et 10-2, la figure 5 détaille surtout la partie 230, qui apporte la fonction bi-fréquence, en traitant le code P, alors que la partie 30, mentionnée ci-dessus, traite le code C/A.

Comme le montrent les figures 1, 5, 6 et 7, le module 230 se décompose en deux étages de tête communs 2120, et des canaux dédiés à un satellite 2300. Il reçoit d'une part la sortie numérique L1 du module 10-1, d'autre part la sortie numérique L2 du module 10-2. Pour conserver des notations suggestives, sans trop de complexité, on désigne ces sorties numériques par le même symbole que la porteuse qu'elles concernent; dans le même esprit, à l'intérieur du module 230, on distinguera par un suffixe L1 ou L2 les unités réalisant des fonctions identiques ou similaires sur les signaux issus de L1 et de L2, respectivement. Il est sous-entendu que l'on traite le code P(Y), sur la base de répliques du code P que l'on engendre.

Ces sorties numériques L1 et L2 sont représentatives en amplitude et phase des signaux reçus, pour tous les satellites perceptibles par l'antenne. Le module 230 reçoit également différentes horloges provenant du générateur d'horloge 20, directement et/ou à travers le module 10-1. Ces sorties d'horloge sont synchrones, en ce sens qu'elles sont toutes rapportées à la même référence temporelle de base.

Comme le montrent les figures 5, 6 et 7, la sortie numérique L1 du module 10-1 est appliquée au bloc 2120L1, qui comprend un mélangeur numérique à bande latérale unique 2121L1, opérant à +420 KHz, suivi d'un circuit de passage en bande de base 2123L1. Ces circuits sont identiques à ceux illustrés en 121 et 123 (décomposé en 123I et 123Q) sur la figure 3, pour l'entrée du module 30 ; abstraction faite du chiffre des milliers et du suffixe, les références numériques sont les mêmes. Leur fonctionnement est décrit dans la demande antérieure 97 12 283.

La sortie en bande de base (25 MHz) du circuit 2123L1 est séparée en une composante en phase (I), notée I_BB_L1, et deux composantes en quadrature (Q), notées Q_BB_L1 et QT_BB_L1. Les composantes en phase d'une part, en quadrature d'autre part, sont obtenues à des instants différents du signal d'horloge à 25 MHz (comme sur la figure 3). Le signal Q_BB_L1 fait l'objet d'un traitement additionnel de filtrage, après lequel il présente le même retard que le signal I_BB_L1 (chose nécessaire pour le discriminateur de code). Par contre, la seconde composante en quadrature QT_BB_L1 reste telle quelle, sans faire l'objet de ce retraitement, car, pour la multiplication quadratique que l'on décrira plus loin, il faut disposer de composantes en phase et en quadrature identiques en bande passante, c'est-à-dire présentant la même fonction de transfert sur le bruit, faute de quoi une composante continue apparaîtrait.

Considérant maintenant les figures 5, 6 et 8, le schéma du bloc d'entrée 2120L2 est le même, sauf que :

- le mélange à bande latérale unique 2121L2 se fait à une fréquence de -2,6 MHz, de façon à retrouver, après le passage en bande de base, la même fréquence de travail de 25 MHz que précédemment ; et
- il n'y a pas de seconde voie en quadrature QT.

On observera qu'après les blocs 2120L1 et 2120L2, les signaux numériques obtenus dans l'un et l'autre cas sont directement comparables (si cela était possible, ce qui n'est pas vrai, car les signaux utiles sont noyés dans le bruit, et la distinction de satellite à satellite n'est pas encore faite).

La distinction des satellites commence au niveau des corrélations, que l'on décrira maintenant. Elle suppose d'abord que l'on ait une estimée du décalage temporel, par rapport à l'horloge locale, du code PRN reçu du satellite considéré, ou, ce qui revient au même, que l'on ait une réplique locale du code PRN de ce satellite, tel que reçu, réplique dite ponctuelle (P). Elle suppose aussi que l'on en déduise une réplique différentielle (D), dite aussi E-L ("Early minus Late"), car elle s'analyse comme la différence (à trois états -1,0,+1) entre une réplique en avance ("Early") et une réplique en retard ("Late") par rapport à la réplique ponctuelle.

La corrélation ponctuelle se fait avec la réplique ponctuelle; la corrélation différentielle peut se faire avec la réplique différentielle, ou bien par la différence entre deux corrélations menées respectivement sur les répliques en avance et en retard. Cette corrélation différentielle sert à réaliser une poursuite temporelle asservie sur le code. La corrélation ponctuelle sert notamment d'une part à retrouver le message de navigation. Elle sert d'autre part à réaliser une poursuite temporelle asservie sur la porteuse, créant ainsi une "image locale de porteuse", dont la phase est plus précise que la "phase de code". Du fait de la modulation par inversion de phase utilisée, la phase de porteuse permet d'obtenir une meilleure précision sur l'estimée de la phase de code : en bref, la "phase de porteuse" aide la "phase de code". En outre, l'image de porteuse permet d'effectuer la démodulation de porteuse dans de meilleures conditions.

Ces choses sont aujourd'hui connues de l'homme du métier. On trouvera si besoin est des précisions complémentaires sur la génération des répliques dans la demande 97 12 283 précitée. On y trouvera aussi des indications sur la manière de rechercher des estimées convenables (phase d'acquisition), avant de réaliser la phase de poursuite du code reçu et de la porteuse concernée.

On décrira maintenant la suite du module 230, en commençant par la porteuse L1, et par les corrélations qui la concernent.

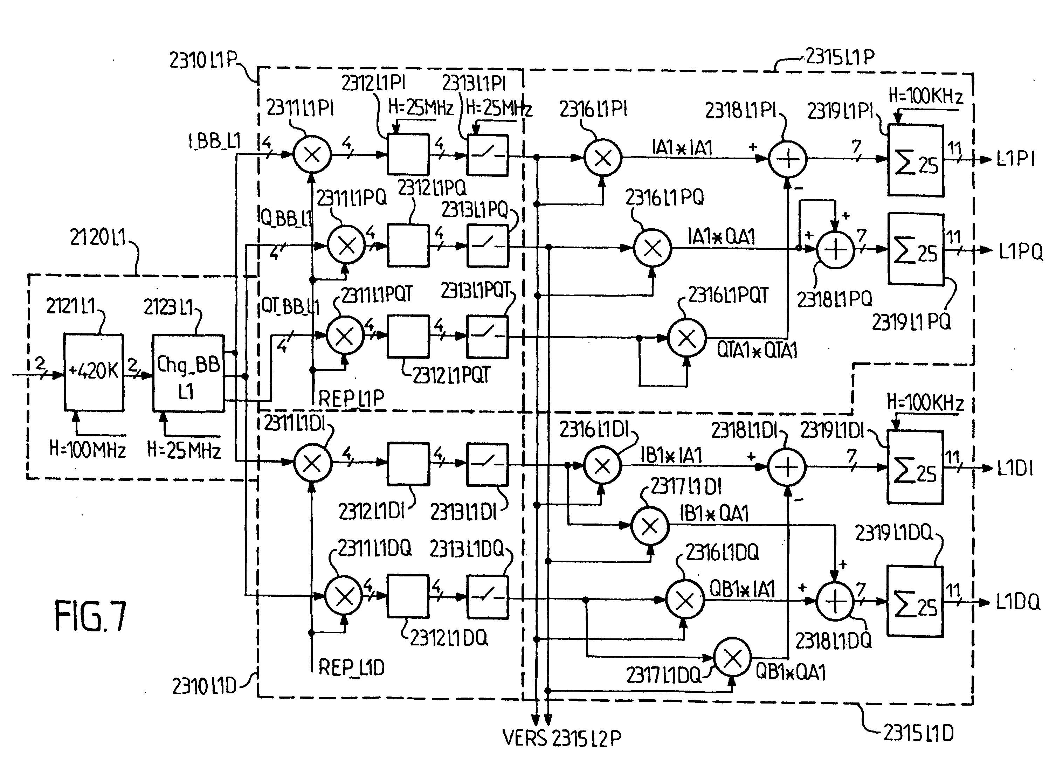

En partie haute de la figure 7, le bloc 2310L1P procède d'abord en parallèle, en 2311L1PI, 2311L1PQ et 2311L1PQT, à trois corrélations ponctuelles des signaux I_BB_L1, Q_BB_L1 et QT_BB_L1, respectivement, avec la réplique de code ponctuel REP_L1P pour la porteuse L1. Les deux premiers corrélateurs 2311L1PI et 2311L1PQ du module 230 correspondent aux corrélateurs 311A et 312A de la figure 2, pour le module 30.

En partie basse de la figure 7, le bloc 2310L1D fait de même pour les corrélations différentielles, faites avec la réplique de code différentielle REP_L1D pour la porteuse L1. En outre, il n'y a pas de voie QT.

Selon l'invention, chacune des corrélations 2311 (ici pour L1) est suivie d'un filtrage numérique passe-bas 2312, cadencé à 25 MHz, avec une fréquence de coupure adaptée au spectre du code W. Vient ensuite un échantillonnage numérique 2314 cadencé à 2,5 MHz. Cela constitue un sur-échantillonnage, puisqu'il y aura cinq échantillons par chip du code W (dont la cadence de chip est 0.5 MHz).

On note maintenant IA1, QA1 et QTA1 les sorties respectives des trois voies de l'unité 2310L1P, ainsi que IB1 et QB1 les sorties des deux voies de l'unité 2310L1D.

L'unité 2315L1P réalise une opération quadratique, suivie d'une intégration. L'opération quadratique est choisie pour supprimer l'effet de la modulation par inversion de phase, tant pour le code W que pour les données (message de navigation). Pour la voie ponctuelle, l'opération quadratique est une élévation au carré, à la manière des nombres complexes, dont l'homme du métier sait qu'ils sont une représentation équivalente des composantes en phase et en quadrature. Plus précisément :

- l'additionneur algébrique 2318L1PI (sous-voie "en phase") fournit la différence entre IA1*IA1 (multiplieur 2316L1PI) et QTA1*QTA1 (multiplieur 2316L1PQT), et
- l'additionneur algébrique 2318L1PQ (sous-voie "en quadrature") fournit le double de IA1*QA1 (multiplieur 2316L1PQ).

Le multiplieur 2316L1PQT utilise QTA1, car, à cause de son filtrage supplémentaire, le signal QA1 créerait de petites erreurs (composante continue) dans le calcul de la différence $IA1^2 - QA1^2$.

En 2319L1PI et 2319L1PQ, les deux sorties des additionneurs font respectivement l'objet d'une sommation sur 25 échantillons, cadencée à 2,5 MHz. On réalise donc une intégration sur 10 microsecondes, ce qui donne une sortie cadencée à 100 kHz.

L'unité 2315L1D réalise aussi une opération quadratique, suivie d'une intégration. Toutefois, s'agissant d'une voie différentielle, l'opération quadratique consiste maintenant en une multiplication complexe avec la voie ponctuelle. Plus précisément :

- l'additionneur algébrique 2318L1DI (sous-voie "en phase") fournit la différence entre IB1*IA1 (multiplieur 2316L1DI) et QB1*QA1 (multiplieur 2317L1DQ), et
- l'additionneur algébrique 2318L1DQ (sous-voie "en quadrature") fournit la somme de IB1*QA1 (multiplieur 2317L1DI) et de QB1*IA1 (multiplieur 2316L1DQ).

En 2319L1DI et 2319L1DQ, les deux sorties des additionneurs font respectivement l'objet d'une sommation sur 25 échantillons, cadencée à 100 KHz.

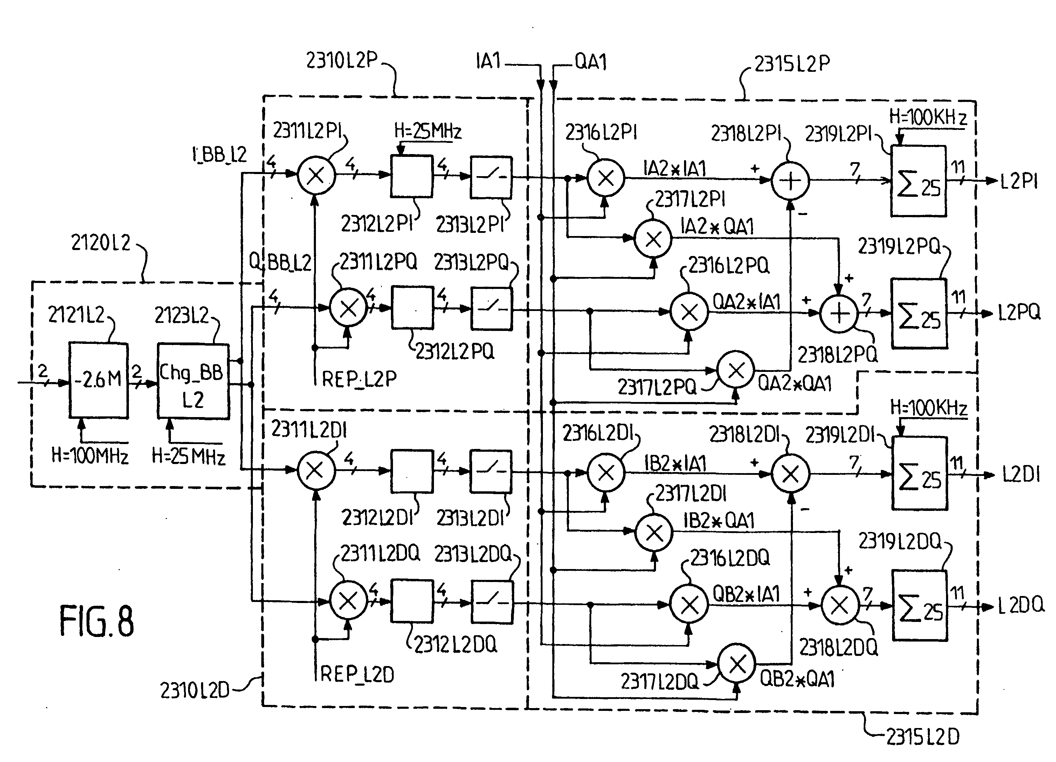

En figure 8, les blocs 2310L2P et 21310L2D ont tous deux la même structure que le bloc 2310L1D (sans sous-voie QT) ; mais il travaillent sur des répliques différentes, à savoir:

- pour le bloc 2310L2P, une réplique de code ponctuelle REP_L2P pour la porteuse L2, et
- pour le bloc 2310L2D, une réplique de code différentielle REP_L2D pour la porteuse L2.

Ensuite, les blocs 2315L2P et 2315L2D réalisent comme précédemment une opération quadratique, suivie d'une intégration. Mais l'opération quadratique est maintenant du genre corrélation croisée avec les signaux IA1 et QA1 ("ponctuels") obtenus en sortie du bloc 2310L1. Plus précisément, dans le bloc "ponctuel" 2315L2P :

- l'additionneur algébrique 2318L2PI (sous-voie "en phase") fournit la différence entre IA2*IA1 (multiplieur 2316L2PI) et QA2*QA1 (multiplieur 2317L2PQ), et
- l'additionneur algébrique 2318L2PQ (sous-voie "en quadrature") fournit la somme de IA2*QA1 (multiplieur 2317L2PI) et de QA2*IA1 (multiplieur 2316L2PQ).

En 2319L2PI et 2319L2PQ, les deux sorties des additionneurs font respectivement l'objet d'une sommation sur 25 échantillons, cadencée à 100 KHz.

De même, dans le bloc "différentiel" 2315L2D :

- l'additionneur algébrique 2318L2DI (sous-voie "en phase") fournit la différence entre IB2*IA1 (multiplieur 2316L2DI) et QB2*QA1 (multiplieur 2317L2DQ), et
- l'additionneur algébrique 2318L2DQ (sous-voie "en quadrature") fournit la somme de QB2*IA1 (multiplieur 2316L2DQ) et de IB2*QA1 (multiplieur 2317L2DI).

En 2319L2DI et 2319L2DQ, les deux sorties des additionneurs font respectivement l'objet d'une sommation sur 25 échantillons, cadencée à 100 KHz.

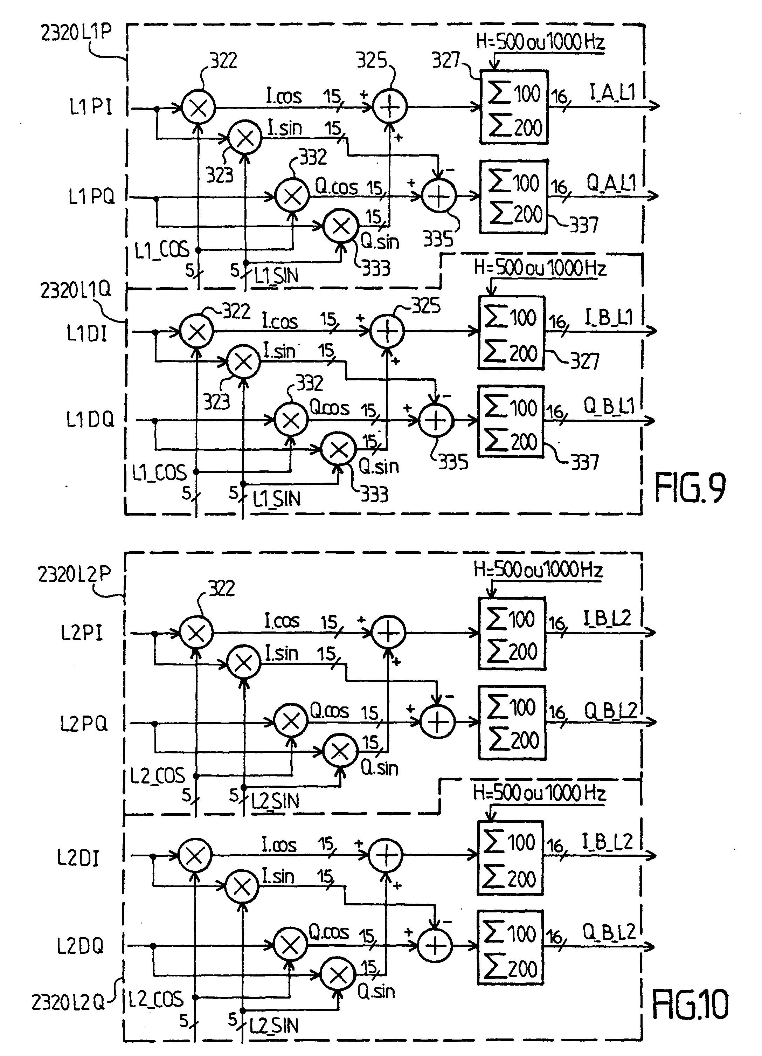

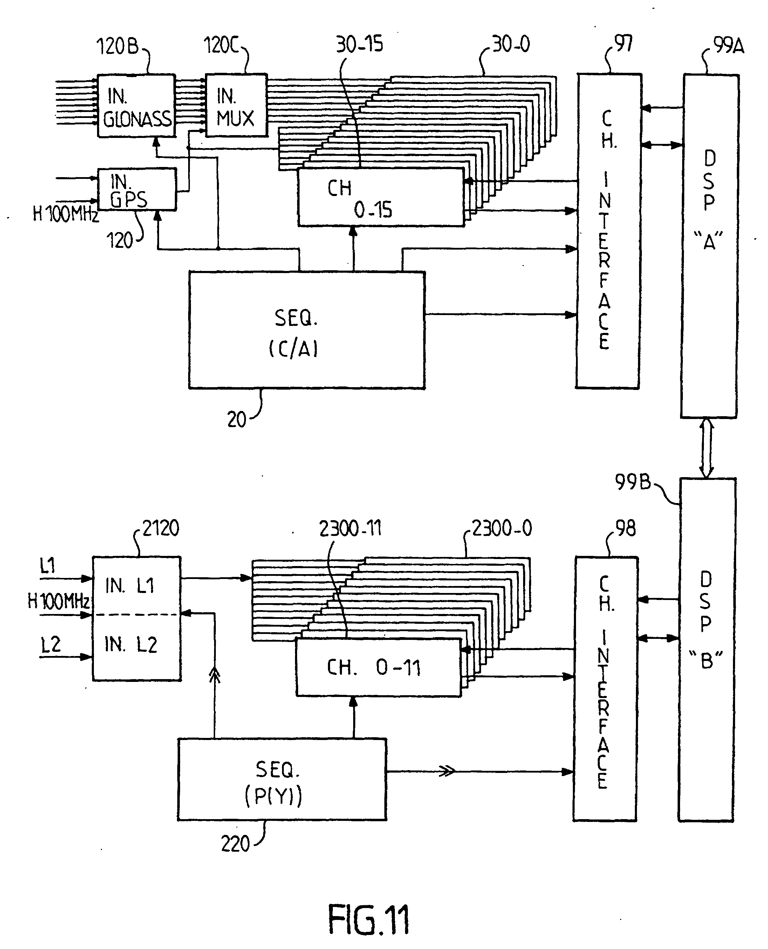

Les quatre sorties de la figure 7 à droite L1PI, L1PQ, L1DI, L1DQ sont appliquées aux entrées de gauche de la figure 9; de même, les quatre sorties de la figure 8 sont appliquées aux entrées de gauche de la figure 10, en L2PI, L2PQ, L2DI, L2DQ.

Pour alléger les notations, on pourra écrire L1PI/Q pour désigner ensemble les signaux L1PI et L1PQ. La méthode est généralisable: par exemple, les répliques REP_L1P et REP_L1D, qui sont deux émanations différentes d'un même code de base, seront désignées ensemble par REP_L1P/D.

Ensuite interviennent les images de porteuse. Pour la porteuse L1, un circuit semblable aux éléments 71 et 75 de la figure 2 fournit des composantes L1_SIN et L1_COS de l'image de porteuse L1, ramenée en bande de base, de manière connue. Pour la porteuse L2, un autre circuit semblable aux éléments 71 et 75 de la figure 2 fournit de même des composantes L2_SIN et L2_COS de l'image de porteuse L2.

La démodulation par la porteuse est une opération du genre produit scalaire entre les composantes en phase (I) et en quadrature (Q) du signal considéré, et les composantes en phase (COS) et en quadrature (SIN) de l'image de porteuse considérée. Comme sur la figure 2, on réalise ensuite une intégration sur 100 ou 200 échantillons (choix commutable en même temps que l'horloge appliquée).

On considère d'abord, en haut de la figure 9, le bloc 2320L1P. Sa structure est la même que celle du bloc 32 de la figure 4, sauf toutefois les intégrateurs 321 et 331 de celui-ci, dont le rôle est joué ici par la famille des intégrateurs 2319. Pour alléger la description des figures 9 et 10, il est alors possible de reprendre telles quelles les notations de la figure 4 pour les éléments internes des blocs de la famille 2320. Implicitement, ces éléments sont munis du même suffixe que le bloc qui les contient : par exemple s'il s'agit d'individualiser le bloc 322 du bloc 2320L1P, on pourra l'appeler 322L1P.

On revient au bloc 2320L1P. Dans sa sous-voie "en-phase", le signal L1PI (11 bits) est appliqué à deux multiplieurs numériques 322 et 323, recevant par ailleurs respectivement les informations L1_COS et L1_SIN, exprimées chacune sur 5 bits. Les résultats respectifs, notés Icos et Isin, sont exprimés sur 11 bits. Le schéma est le même pour le signal L1PQ (sous-voie "en-quadrature"), avec les deux multiplieurs numériques 332 et 333, dont les résultats respectifs, notés Qcos et Qsin, sont exprimés sur 11 bits.

A partir de là, les sorties principales du bloc 2320L1P comprennent une sortie en phase I_A_L1, fournie par un additionneur numérique 325 qui construit Icos + Qsin, sur 15 bits, ce qu'un sommateur 327 accumule sur 16 bits, et une sortie en quadrature Q_A_L1, fourni par un soustracteur numérique 335 qui construit Qcos - Isin, sur 15 bits, ce qu'un sommateur 337 accumule sur 16 bits.

En résumé, après démodulation par la porteuse et intégration, on obtient en sortie le couple de signaux numériques (I_A_L1, Q_A_L1) pour le bloc 2320L1P (porteuse L1, voie ponctuelle).

Les blocs 2320L1D (porteuse L1, voie différentielle ; figure 9), 2320L2P (porteuse L2, voie ponctuelle ; figure 10) et 2320L2D (porteuse L2, voie différentielle ; figure 10) opèrent exactement de la même manière, pour fournir respectivement les couples de signaux numériques (I_B_L1,Q_B_L1), (I_A_L2,Q_A_L2) et (I_B_L2,Q_B_L2).

Tous ces couples de signaux, à savoir (I_A_L1, Q_A_L1), (I_B_L1,Q_B_L1), (I_A_L2,Q_A_L2) et (I_B_L2,Q_B_L2) sont transmis au calculateur général 99 (Figure 5), à travers le circuit d'Interface Canal 2400, et l'interface multi-canaux 98 dont on parlera plus loin.

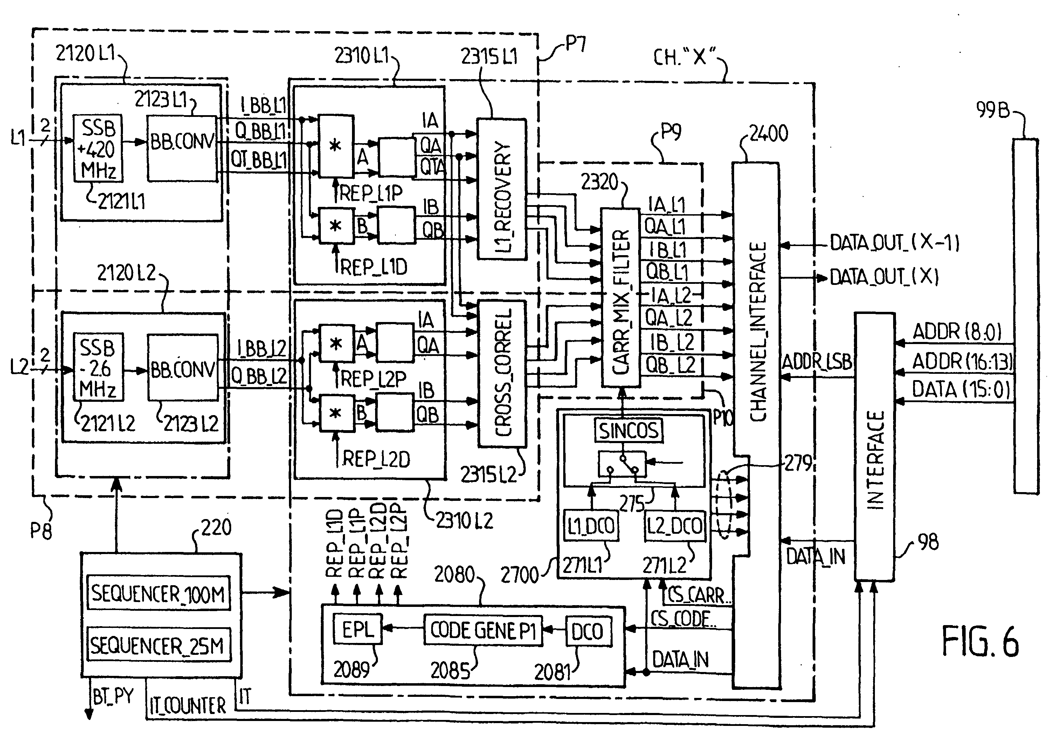

Le couple (I_A_L1, Q_A_L1) sert à ajuster une boucle d'asservissement de porteuse L1. L'oscillateur de porteuse L1 est noté 271L1 (figure 6). Le reste de l'asservissement comprend un étage de verrouillage de phase PLL qui reçoit ledit couple. Cet étage PLL est incorporé à l'unité de gestion 99. L'aller des données comprend des données de fraction de tour et de nombre de tours, qui vont vers l'interface 2400 par les lignes 279. Le retour des données ferme la boucle en commandant l'oscillateur par le bus de données (DATA_IN), sous le contrôle du signal CS_CARR, qui active le bloc de porteuse 2700 et sélectionne l'oscillateur concerné.

Cet asservissement est constitué à la manière illustrée dans le schéma de principe de la figure 2.

Le couple (I_A_L2, Q_A_L2) sert de même à ajuster une boucle d'asservissement de porteuse L2. La figure 6 montre l'oscillateur de porteuse L2 noté 271L2. Elle montre aussi que le générateur sinus cosinus est partagé par multiplexage entre les deux oscillateurs de porteuse 271 (L1 et L2), ce qui est un aspect significatif de la présente invention. Là aussi, le reste (étage PLL) est incorporé à l'unité de gestion 99. Le retour des données s'effectue comme ci-dessus.

Le couple (I_B_L1, Q_B_L1) sert à ajuster une boucle d'asservissement de code P. Le module 230 comprend (figure 6) un bloc 2080 comprenant un oscillateur de code 2081, un générateur de code 2085, et un circuit de formatage 2089 des 4 codes précités. L'étage de verrouillage de retard DLL est incorporé au calculateur général 99 (Figure 5). La liaison se fait à travers le circuit d'Interface Canal 2400, qui est relié au module 2080 par le bus de données (DATA_IN), sous le contrôle du signal CS_CODE, qui active le bloc de code 2080.

L'asservissement de code fonctionne généralement de la même manière que celui illustré sur la figure 2 (oscillateur de code 81, et étage de verrouillage de retard DLL 50 recevant le couple I_B,Q_B), mais pour le code P au lieu du code C/A.

Il sert à caler conjointement les répliques REP_L1P et REP_L1D.

Le couple (I_B_L2, Q_B_L2) fait de même, mais seulement pour ajuster, dans le formatage 2089, le retard des répliques REP_L2P et REP_L2D par rapport à REP_L1P et REP_L1D, respectivement.

Le séquenceur 220 gère localement l'ensemble des horloges.

Les circuits PLL et DLL des asservissements sont réalisés de manière logicielle, dans le calculateur 99. Ils utilisent les techniques connues de l'homme de métier, et décrites notamment dans :

- SPILKER, J.J., Jr, *Carrier-phase tracking and oscillator-phase noise,* Digital Communications by Satellite, Prentice-Hall, 1977, chapter 12, pp. 336-397,
- SPILKER, J.J., Jr, *Delay-lock tracking* of *pseudonoise signals,* Digital Communications by Satellite, Prentice-Hall, 1977, chapter 18, pp. 528-608,
- SPILKER, J.J., Jr, *GPS Signal Structure and Performance Characteristics,* Global Positioning System, Volume 1, The Institute of Navigation, 1980, pp. 29-54.

La sortie du circuit PLL, pour les signaux L1, est définie par l'expression ArcTan(Q_A_L1/I_A_L1), avec une approximation adéquate de la fonction Arc-Tangente. La sortie du circuit DLL, pour les signaux L1, est définie par l'expression suivante :

$$(I\_A\_L1 * I\_B\_L1 + Q\_A\_L1 * Q\_B\_L1) / (I\_A\_L1^2 + Q\_A\_L1^2)$$

On décrira maintenant le fonctionnement du récepteur.

La Demanderesse rapproche l'une de l'autre les voies L1 et L2 pour le code P. Mais, à l'opposé des approches antérieures, elle ne cherche pas à prendre en compte l'écart temporel de propagation au niveau de la création des images de porteuse. En effet: il y a deux images de porteuse L1, l'une pour le code C/A, dans le module 30, l'autre pour le code P, dans le module 230. Ces deux images sont ramenées à la même bande de base, de même que l'image de porteuse L2 pour le code P. En outre, on dispose en permanence des images de porteuse L1 et L2 pour le code P ; et l'on réalise en permanence deux asservissements de code (même s'il n'y a qu'un générateur de code, l'autre asservissement portant sur un retard variable).

On se place maintenant en sortie des corrélations 2311 ponctuelles (L1P,I et Q ; L2P,I et Q). En poursuite, avec un code P bien aligné, la sortie des corrélations correspond au code W secret (indétectable, car noyé dans le bruit).

D'après le document-brevet EP-A-0 508 621 (ASHTECH), il semble avoir été proposé de "suivre" ce code W, au moins en récupérant son horloge, pour faire ensuite une accumulation (Integrate and Dump) sur 2 microsecondes (la période du code W).

En d'autres termes, après la corrélation du code P(Y) reçu avec la réplique locale du code P, la technique antérieure utilise un filtrage à Intégration/Cumul ("Integrate and Dump" ou I&D), d'une durée de 2 µS, en vue d'estimer le bit en cours du code W. Un tel filtre I&D se définit comme un filtre à réponse impulsionnelle finie (FIR) à fenêtre rectangulaire, sous-échantillonné en sortie à une cadence égale à la durée de la fenêtre. Il en découle notamment que la suite du traitement numérique se fait à la cadence du code W, soit 500 kHz. Mais, pour synchroniser l'intégration/ cumul, il faut prévoir une voie de réception supplémentaire par canal, afin de détecter la fréquence et la phase des transitions du code W. On utilise aussi le fait que l'horloge du code W serait réinitialisée avec chaque "époque" X1A du code P (0,4 ms).

La Demanderesse a mis au point une autre technique, susceptible de donner au moins les mêmes résultats, et qui a en outre les avantages suivants:

- mettre en oeuvre tous les moyens nécessaires pour effectuer en permanence toutes les mesures sur tous les codes et toutes les porteuses,
- faire cela sans compliquer exagérément le traitement numérique, en conservant une bonne sensibilité du récepteur, avec un faible facteur de bruit, et en utilisant un codage analogique/numérique sur 2 bits.

La Demanderesse a cherché à s'affranchir de toute hypothèse incertaine sur la phase du code W. Elle a observé ce qui suit:

- l'utilisation d'un seul oscillateur local optimise le matériel, et assure la conservation de la phase des deux porteuses L1 et L2 dans tout le reste des circuits en aval,

- en effectuant la démodulation de porteuse en aval, après la corrélation par le code, il est possible d'utiliser pour créer l'image de porteuse un oscillateur à commande numérique (NCO) précis, travaillant à 100 kHz, à une cadence adaptée au décalage Doppler du signal (au lieu de 25 MHz dans les solutions connues).

La Demanderesse a alors perçu la possibilité de construire un récepteur de code P(Y) opératoire, avec, pour seule hypothèse sur le code W, le fait que sa fréquence moyenne est d'environ 500 kHz.

Après corrélation par le code P en 2311, l'unité 2312 réalise un filtrage numérique passe-bas adapté au mieux au spectre du code W, à une cadence de 25 MHz. Ce filtrage est suivi d'un échantillonnage à 2,5 Mhz qui constitue un sous-échantillonnage par rapport à la cadence du filtre, mais un sur-échantilonnage du code W, puisque l'on obtient 5 échantillons par chip de celui-ci.

La Demanderesse préfère actuellement un filtrage récursif à réponse impulsionnelle infinie (IIR), plus précisément un filtre simple, dont l'équation récurrente est:

$$y_n = y_{n-1} + k (x_n - y_{n-1})$$

où $x_n$, $y_{n-1}$ et $y_n$ sont respectivement l'échantillon d'entrée en cours, l'échantillon de sortie précédent et l'échantillon de sortie mis à jour. Ce filtrage récursif correspond à un filtre passe-bas analogique du premier ordre, de constante de temps $\tau$, avec

$$k = 1 - e^{T/\tau}$$

où T est la période de récurrence du filtrage (période d'échantillonnage), avec ici T = 40 nanosecondes. La fréquence de coupure à 3 dB est $F_{3dB} = 1/2\pi\tau$, et la bande équivalente de bruit est $B_n = 1/4\tau$.

De préférence, k est l'inverse d'une puissance de 2, ce qui simplifie encore la réalisation du filtre. Avec k = 1/16, il vient $\tau$ = 640 ns, $F_{3dB}$ = 250 kHz, et $B_n$ = 400 kHz.

En pratique, afin d'éviter le risque d'oscillations (cycles limites) inhérentes au filtrage récursif, la Demanderesse a en outre augmenté la dynamique du signal d'entrée, en le multipliant par 64, ce qui le fait passer de 4 à 10 bits. On applique ensuite le filtre ayant l'équation ci-dessus, avec k = 1/16. En sortie, on divise par 16 (ce qui enlève 4 bits), afin que le bruit de quantification en sortie reste négligeable devant le bruit du signal.

La Demanderesse a remarqué que le rapport $C/N_0$ est en pratique au maximum de 60 dB.Hz en sortie. On peut donc réaliser un écrêtage (ignorer les 2 bits de poids supérieur), limitant l'étendue binaire en sortie à 4 bits.

La Demanderesse a observé qu'il était avantageux de faire un tel filtrage de la sortie des corrélateurs, sur une période (fréquence de coupure d'environ 250 kHz) supérieure à la période du code W (fréquence environ 500 kHz). En ré-échantillonnant ensuite à 2,5 MHz, on obtient 5 échantillons par chip du code W. Il s'est avéré que cela suffit pour effectuer la suite des traitements, sans faire aucune hypothèse sur la phase du code W, et sans chercher à reconstituer son horloge.

A l'entrée du filtrage 2312, la bande utile est de 12,5 MHz (la moitié de la fréquence d'échantillonnage). Les blocs 2312 et 2313 réduisent la bande à 1,25 MHz. C'est la bande de travail des multiplieurs du bloc 2315. En sortie des intégrateurs 2319, la bande est descendue à 50 kHz, et il n'y a plus besoin de se préoccuper du code W.

Le ré-échantillonnage à 2,5 MHz effectué en 2313 tient compte d'un compromis entre le nombre d'échantillons désiré par chip du code W et la rapidité demandée aux multiplieurs des transformations quadratiques. Il faut au moins un bit par chip du code W, de préférence au moins 2 bits.

On notera que le filtre ainsi constitué est simple à mettre en oeuvre et rapide en son fonctionnement.

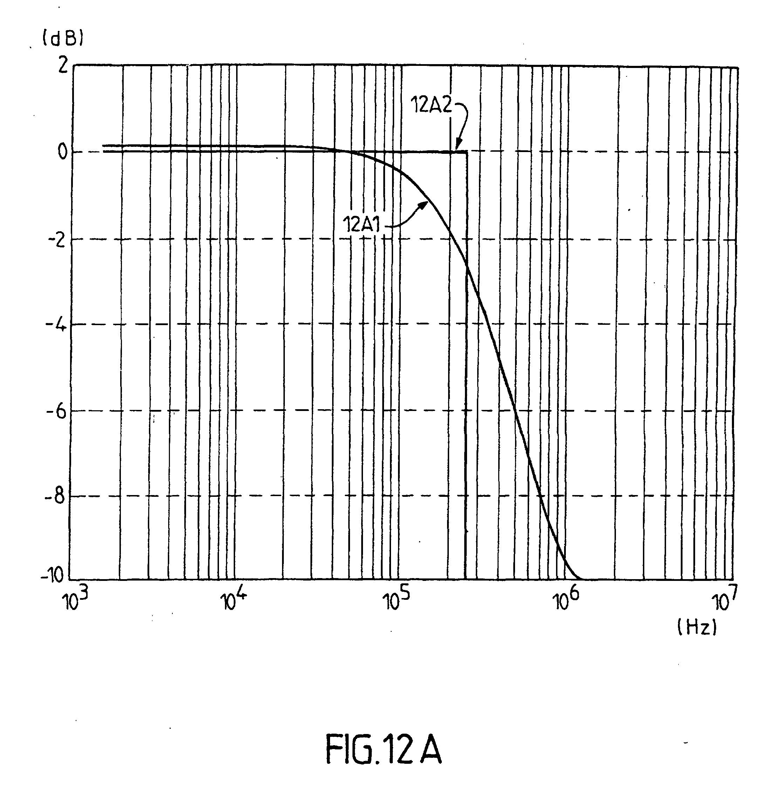

La figure 12A illustre en 12A1 la fonction densité spectrale de puissance de bruit d'un filtre selon l'invention, après le ré-échantillonnage à 2,5 MHz, comparativement à la fonction densité spectrale de puissance de bruit d'un filtre de type I&D de la technique antérieure, avec calage sur l'horloge du code W, et après un échantillonnage à 500 kHz (courbe rectangulaire 12A2). Un bruit blanc est supposé appliqué à l'entrée des filtres.

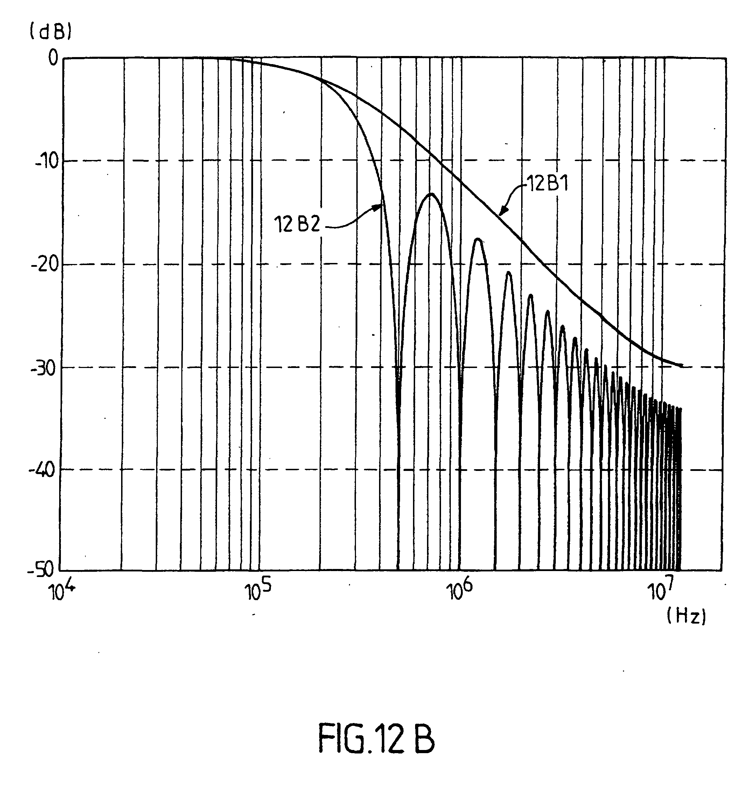

La figure 12B illustre les fonctions de transfert. La courbe bosselée 12B2 en forme de sin X / X correspond à un filtre de type I&D de la technique antérieure, travaillant à 25 MHz, pour lequel la bande équivalente de bruit est d'environ 250 kHz. L'autre courbe 12B1 correspond au cas de la présente invention, avec une bande équivalente de bruit d'environ 400 kHz.

Sur la figure 7, le bloc 2315L1P sert à l'asservissement de porteuse L1. Dans ce bloc, l'élévation au carré fait disparaître la modulation bi-phase par le code W (et tout autre code accompagnant).

Dans le bloc 2315L1D, on fait une inter-corrélation entre d'une part le code W présent dans la corrélation différentielle faite sur la porteuse L1 avec la réplique locale du code P, et d'autre part le code W qui reste après la corrélation ponctuelle sur la porteuse L1 avec la même réplique du code P. Cette opération fait aussi disparaître la modulation bi-phase par le code W. Et la sortie peut alors servir à asservir ladite réplique locale du code P pour la porteuse L1.

Sur la figure 8, le bloc 2315L2P fait une inter-corrélation entre d'une part le code W présent dans la corrélation ponctuelle faite sur la porteuse L1 avec la réplique locale du code P (premier opérande), et d'autre part le code W qui reste après la corrélation ponctuelle sur la porteuse L2 avec une autre réplique du code P, celle pour la porteuse L2 (second opérande). Même si le code W n'a pas la même phase dans les deux opérandes, l'opération quadratique fait là aussi disparaître la modulation par ce code W.

La situation est la même pour le bloc 2315L2D, sauf qu'il réalise l'inter-corrélation entre d'une part le code W présent dans la corrélation ponctuelle faite sur la porteuse L1 avec la réplique locale du code P, et d'autre part le code W qui reste après la corrélation différentielle sur la porteuse L2 avec ladite autre réplique du code P qui correspond à la porteuse L2.

Les avantages de faire l'élévation au carré sur la voie ponctuelle pour L1 sont les suivants: on connaît déjà la phase de L1 avec une bonne précision à l'aide du code C/A, ce qui permet de prépositionner l'oscillateur de porteuse L1 (271L1); en outre, l'ambiguïté doublée par l'élévation au carré n'est pas gênante, puisqu'elle peut être levée par l'information en provenance de la voie C/A. De plus, les autres opérations quadratiques sont du type inter-corrélation avec cette voie L1P, ce qui, contrairement à l'élévation au carré, ne double pas l'ambiguïté.

On décrira maintenant les aspects multi-satellites et la modularité du récepteur selon l'invention.

La figure 1 montre que le récepteur décrit possède une structure d'une grande modularité, puisque les mêmes circuits intégrés servent à faire les deux étages de réception haute fréquence 10-1 et 10-2, tandis qu'on retrouve une structure parallèle avec deux modules de traitement 30 et 230, précédant les interfaces qui aboutissent au calculateur général 99. De préférence, celui-ci est subdivisé en deux processeurs DSP interconnectés, à savoir 99A pour le code C/A et 99B pour le code P(Y).

Globalement (figure 11), pour le code P, le récepteur comprend, en aval du couple d'étages d'entrée 2120L1 et 2120L2, une pluralité de "plans" superposés de circuits 2300-0 à 2300-11, formant des modules de traitement à coïncidence sur le code P(Y) pour 12 satellites, respectivement. Leur interface interne 2400 communique par un bus DATA_IN avec une interface multi-canaux 98 pour le code P. Un autre bus DATA_OUT est agencé en chaînage de type "daisy chain" entre les différentes interfaces 2400 (voir la figure 6, pour le canal de rang "X"), la dernière étant reliée à l'interface multi-canaux 98. L'interface multi-canaux communique avec le processeur 99B, du type DSP, par des liaisons classiques, notamment un bus d'adresses et un bus de données. L'ensemble est cadencé par le séquenceur général 220.

De même, pour le code C/A de la porteuse L1 (figure 11), on prévoit jusqu'à 16 plans 30-0 à 30-15 du circuit 30 (soit 16 modules de traitement à coïncidence pour le code C/A). Les entrées peuvent être celles de la figure 2 (circuit 120), ou bien des entrées GLONASS, obtenues de manière connue en 120B. Les entrées d'une partie au moins des plans 30 sont contrôlées par un multiplexeur 120C. Chaque circuit 30 comprend une interface interne (non représentée, mais semblable à l'interface 2400), qui communique par des bus DATA_IN et DATA_OUT avec une interface multi-canaux 97 pour le code C/A. L'interface multi-canaux communique avec le calculateur 99A par des liaisons classiques, notamment un bus d'adresses et un bus de données. L'ensemble est cadencé par le séquenceur 20.

Ainsi, à travers les interfaces, tout remonte au calculateur 99.

Il a déjà été indiqué que les modules 10-1 et 10-2 sont identiques, aux filtres près. L'homme du métier appréciera que les modules 30 et 230, quoique de constitution différente, comportent de nombreuses fonctionnalités similaires. Ils peuvent donc être réalisés sous la forme de circuits intégrés conçus tous deux de manière économique. A cela s'ajoute la superposition de différents plans, pilotés par des bus respectifs, et dont chacun comprend les éléments précités. Cette homogénéité de conception est une autre caractéristique très significative du récepteur proposé, qui présente un intérêt en elle-même.

En outre, par la modularité décrite, le traitement du code P est entièrement séparé de celui du code C/A, jusques et y compris au niveau des processeurs DSP 99A et 99B.

Ainsi, la Demanderesse a pu satisfaire les objectifs suivants:

- proposer un récepteur bi-fréquence compétitif, c'est-à-dire dont le surcoût par rapport aux meilleurs récepteurs mono-fréquence s'accompagne d'une augmentation sensible des performances,
- construire un récepteur bi-fréquence qui exploite en continu le code C/A de la porteuse L1, le code P(Y) de la porteuse L1 et le code P(Y) de la porteuse L2, non seulement dans sa partie haute fréquence, ce qui est indispensable, mais aussi dans sa partie numérique, d'abord au niveau des corrélations, mieux au niveau de l'asservissement de code, et mieux encore au niveau des asservissements de porteuse, ce qui donne accès en permanence à l'ensemble des mesures (observables) sur tous les codes et toutes les fréquences,
- utiliser ce que l'on connait du code Y, c'est-à-dire sa fréquence, sans a priori, c'est-à-dire sans chercher à connaître sa phase,
- élaborer un récepteur de construction modulaire, en particulier reprenant la quasi-totalité des composants d'un récepteur mono-fréquence, en conservant les avantages de performances récemment acquis par ceux-ci.

- réaliser cette modularité de sorte qu'on obtienne un récepteur bi-fréquence par simple addition de matériel à un récepteur mono-fréquence.

A la place du filtrage numérique récursif, il serait envisageable d'utiliser d'autres filtrages passe-bas, en particulier du type moyenne mobile, pourvu que l'on conserve les caractéristiques essentielles d'adaptation au spectre du code W, avec une bande équivalente de bruit de l'ordre de 400 à 500 kHz, dans cet exemple. Ces techniques conduiraient cependant à une plus grande complexité de réalisation.

Les techniques exposées ici restent valables sans traitement préliminaire d'un code court (code C/A), pour des systèmes (autres que le GPS, en l'état actuel des choses) qui posséderaient des codes cryptés de longueur moindre que le code P(Y).

D'autres variantes sont envisageables, par exemple réunir les deux processeurs 99A et 99B en un seul, en perdant un peu de la modularité.

Bien entendu, la présente invention est entièrement compatible avec tous les aménagements décrits dans la demande de brevet français N° 9712283 précitée, ainsi qu'avec l'objet de la demande de brevet français N° 9707488 du 17 juin 1997, intitulée "Perfectionnements aux procédés et systèmes de localisation radiosatellitaire en temps réel, notamment de type GPS", et aussi avec FR-A-2715230, FR-A-2734643, FR-A-2735240.

## Revendications

1. Dispositif récepteur de radionavigation, du type comportant :

   - des moyens de réception haute fréquence (10), pour recevoir des signaux de radio-navigation à deux porteuses (L1,L2), modulées par inversion de phase par un code pseudo-aléatoire (P(Y)), et pour fournir deux sorties numériques (L1,L2), respectivement pour ces deux porteuses,
   - un générateur (2080) de premières et secondes répliques (REP_L1P/D;REP_L2P/D), d'un code (P) correspondant au moins partiellement audit code (P(Y)),
   - un générateur (2700) d'images locales des deux porteuses,
   - des moyens de corrélation (2311), pour effectuer des corrélations ponctuelle et différentielle, d'une part (IA1,-QA1,QTA1;IB1,QB1) entre la première sortie numérique (L1) et les premières répliques de code (REP_L1P/D), et d'autre part (IA2,QA2;IB2,QB2) entre la seconde sortie numérique (L2) et les secondes répliques de code (REP_L2P/D),
   - des moyens (2315) pour établir des transformées quadratiques (L1PI/Q;L2PI/Q;L1DI/Q;L2DI/Q) des sorties ponctuelles (IA1,QA1,QTA1;IA2,QA2) et différentielles (IB1,QB1;IB2,QB2) des moyens de corrélation, et
   - des moyens de traitement (99) pour asservir les premières et secondes répliques de code (REP_L1P/D; REP_L2P/D) d'après lesdites sorties quadratiques différentielles (L1DI/Q;L2DI/Q), respectivement, pour asservir aussi les images des deux porteuses (271L1,271L2) d'après les sorties quadratiques ponctuelles (L1PI/Q;L2PI/Q), respectivement, ainsi que pour exploiter les informations temporelles issues de ces asservissements pour déterminer la position du récepteur,

   **caractérisé en ce qu'**il comporte, entre chacune des corrélations (2311) et les moyens (2315) de transformation quadratique, un filtrage passe-bas numérique (2312), suivi d'un ré-échantillonnage (2313) formant un sur-échantillonnage de la différence (W) entre le code réel (P(Y)) et le code de base des premières et secondes répliques, tandis que les premières et secondes répliques sont engendrées à partir d'un même oscillateur local.

2. Dispositif selon la revendication 1, dans lequel la première desdites porteuses est en outre modulée par inversion de phase par un autre code pseudo-aléatoire (C/A), plus court, **caractérisé en ce qu'**il comporte un générateur (81,85,89) de répliques de cet autre code (CODE A,B,C), un générateur (71) d'une image locale de la première porteuse, ainsi que d'autres moyens de corrélation (311,312), agencés pour effectuer des corrélations ponctuelle et différentielle de la première sortie numérique (L1) avec des répliques de cet autre code (C/A), et **en ce que** les moyens de traitement (99) sont agencés pour asservir d'abord les répliques de cet autre code d'après la corrélation différentielle, ainsi que l'image de la première porteuse d'après la corrélation ponctuelle, afin de pré-positionner lesdits asservissements des premières et secondes répliques de code.

3. Dispositif selon l'une des revendications 1 à 2, **caractérisé en ce que** les deux générateurs d'image de la première porteuse sont entièrement séparés (71;2700).

4. Dispositif selon l'une des revendications précédentes, **caractérisé en ce que** le filtrage passe-bas (2312) est réalisé par un filtre numérique cadencé à environ 25 MHz, suivi du ré-échantillonnage (2313) à cadence environ 10 fois moindre.

5. Dispositif selon l'une des revendications précédentes, **caractérisé en ce que** les moyens (2315) de transformation quadratique comportent une intégration numérique (2319) en sortie.

6. Dispositif selon l'une des revendications précédentes, **caractérisé en ce que** le filtrage passe-bas (2312) est réalisé par un filtre numérique récursif.

7. Dispositif selon la revendication 6, **caractérisé en ce que** ledit filtre a pour équation récurrente:

$$y_n = y_{n-1} + k (x_n - y_{n-1})$$

où $x_n$, $y_{n-1}$ et $y_n$ sont respectivement l'échantillon d'entrée en cours, l'échantillon de sortie précédent et l'échantillon de sortie mis à jour.

8. Dispositif selon l'une des revendications précédentes, **caractérisé en ce que** le filtrage passe-bas (2312) est accompagné d'un écrêtage.

9. Dispositif selon l'une des revendications précédentes, du type GPS, **caractérisé en ce que** l'approximation du code étant le code P, et le code réel étant le code P(Y), la fréquence de coupure dudit filtrage passe-bas (2312) est d'environ 250 kHz.

10. Dispositif selon l'une des revendications précédentes, du type GPS, **caractérisé en ce que**, la différence entre l'approximation (P) du code et le code réel P(Y) étant un code de brouillage (W) de cadence connue au moins approximativement, la cadence du ré-échantillonnage (2313) est au moins deux fois supérieure à la cadence de ce code de brouillage (W).

11. Dispositif selon l'une des revendications précédentes, **caractérisé en ce que** les moyens de transformation quadratique (2315) sont agencés pour multiplier sélectivement chacune des sorties ponctuelles et différentielles des moyens de corrélation (IA1,QA1; IB1,QB1;IA2,QA2;IB2,QB2), par l'une des deux sorties ponctuelles.

12. Dispositif selon la revendication 11, prise en combinaison avec la revendication 2, **caractérisé en ce que** les moyens de transformation quadratique (2315) sont agencés pour multiplier sélectivement chacune des sorties ponctuelles et différentielles des moyens de corrélation (IA1,QA1; IB1,QB1;IA2,QA2;IB2,QB2), par la sortie ponctuelle relative à la première porteuse (IA1,QA1).

13. Dispositif selon l'une des revendications précédentes, **caractérisé en ce que** les moyens de réception haute fréquence sont agencés en deux modules semblables (10-1,10-2), travaillant respectivement pour la première porteuse et la seconde porteuse.

14. Dispositif selon la revendication 13, prise en combinaison avec la revendication 2, **caractérisé en ce qu'**il comporte une pluralité de modules de traitement à coïncidence (230) reliés aux deux modules de traitement haute-fréquence, et consacrés audit code (P(Y)) à la fois pour la première porteuse et la seconde porteuse, mais pour différents satellites, chaque module comprenant ses générateurs de répliques et d'images de porteuse, ses moyens de corrélation, et ses moyens de transformation quadratique,
et **en ce qu'**il est prévu une pluralité d'autres modules (30) de traitement à coïncidence, reliés à l'un des deux modules de traitement haute-fréquence, et consacrés à la première porteuse et audit autre code (C/A), pour différents satellites.

15. Dispositif selon l'une des revendications précédentes, **caractérisé en ce que** les moyens d'exploitation (99) sont agencés pour utiliser en permanence l'ensemble des mesures observables sur la totalité des codes et des porteuses des satellites traités.

**Patentansprüche**

1. Funknavigationsempfängervorrichtung von dem Typ, der Folgendes umfasst :

   - Hochfrequenzempfängereinrichtungen (10), um Funknavigationssignale mit zwei Trägerwellen (L1, L2) zu empfangen, die durch Phasenumkehr mit einem pseudozufälligen Code (P(Y)) moduliert wurden, und um für diese zwei Trägerwellen zwei digitale Ausgänge (L1, L2) bereitzustellen,
   - einen Generator (2080) für erste und zweite Repliken (REP_L1P/D; REP_L2P/D) eines Codes (P), der zumindest teilweise dem Code (P(Y)) entspricht,
   - einen Generator (2700) für lokale Abbildungen der beiden Trägerwellen,
   - Korrelationseinrichtungen (2311), um Punkt- und Differentialkorrelationen einerseits (IA1, -QA1, QTA1; IB1, QB1) zwischen dem ersten digitalen Ausgang (L1) und den ersten Coderepliken (REP_L1P/D) und andererseits (IA2, QA2; IB2, QB2) zwischen dem zweiten digitalen Ausgang (L2) und den zweiten Coderepliken (REP_L2P/D) herzustellen,
   - Einrichtungen (2315), um aus den Punktausgängen (IA1, QA1, QTA1; IA2, QA2) und Differentialausgängen (IB1, QB1; IB2, QB2) der Korrelationseinrichtungen Quadraturtransformierte (L1PI/Q; L2PI/Q; L1DI/Q; L2DI/Q) herzustellen, und
   - Aufbereitungseinrichtungen (99), um die ersten und zweiten Coderepliken (REP_L1P/D; REP_L2P/D) jeweils den Differentialquadratausgängen (L1DI/Q; L2DI/Q) entsprechend zu triggern bzw. zu steuern, um auch die Abbildungen der beiden Trägerwellen (271L1, 271L2) jeweils den Punktquadraturausgängen (L1PI/Q; L2PI/Q) entsprechend zu steuern, sowie um die Zeitdaten zu verarbeiten, die sich aus diesen Steuervorgängen ergeben, um die Position des Empfängers zu bestimmen,

   **dadurch gekennzeichnet, dass**
   sie zwischen jeder der Korrelationen (2311) und den Quadraturtransformationseinrichtungen (2315) eine digitale Tiefpassfilterung (2312) umfasst, gefolgt von einer Wiederabtastung (2313), die eine Überabtastung des Unterschieds (W) zwischen dem realen Code (P(Y)) und dem Basiscode der ersten und zweiten Repliken darstellt, während die ersten und zweiten Repliken von einem lokalen Oszillator erzeugt werden.

2. Vorrichtung nach Anspruch 1,
   wobei die erste der Trägerwellen darüber hinaus durch Phasenumkehr mit einem anderen, kürzeren pseudozufälligen Code (C/A) moduliert wird,
   **dadurch gekennzeichnet, dass**
   sie einen Generator (81, 85, 89) für Repliken dieses anderen Codes (CODE A, B, C), einen Generator (71) für eine lokale Abbildung der ersten Trägerwelle, sowie weitere Korrelationseinrichtungen (311, 312) umfasst, die so eingerichtet sind, dass sie Punkt- und Differentialkorrelationen des ersten digitalen Ausgangs (L1) mit Repliken dieses anderen Codes (C/A) bewirken bzw. herstellen, und dass die Aufbereitungseinrichtungen (99) so eingerichtet sind, dass sie zuerst die Repliken dieses anderen Codes nach der Differentialkorrelation, sowie die Abbildung der ersten Trägerwelle nach der Punktkorrelation steuern, um die Steuervorgänge für erste und zweite Coderepliken bereitzuhalten.

3. Vorrichtung nach einem der Ansprüche 1 oder 2,
   **dadurch gekennzeichnet, dass**
   die beiden Abbildungsgeneratoren für die erste Trägerwelle vollständig getrennt sind (71; 2700).

4. Vorrichtung nach einem der vorhergehenden Ansprüche,
   **dadurch gekennzeichnet, dass**
   die Tiefpassfilterung (2312) durch ein digitales Filter erfolgt, das auf ca. 25 MHz getaktet ist, gefolgt von der Wiederabtastung (2313) mit einem ca. zehnmal niedrigeren Takt.

5. Vorrichtung nach einem der vorhergehenden Ansprüche,
   **dadurch gekennzeichnet, dass**
   die Quadraturtransformationseinrichtungen (2315) am Ausgang eine digitale Integration umfassen (2319).

6. Vorrichtung nach einem der vorhergehenden Ansprüche,
   **dadurch gekennzeichnet, dass**
   die Tiefpassfilterung (2312) durch ein rekursives digitales Filter erfolgt.

**7.** Vorrichtung nach Anspruch 6,
**dadurch gekennzeichnet, dass**
das Filter folgende rekurrente Gleichung umfasst:

$$y_n = y_{n-1} + k\,(x_n - y_{n-1})$$

worin $x_n$, $y_{n-1}$ und $y_n$ die laufende Eingangsabtastung, die vorhergehende Abtastung bzw. die aktualisierte Abtastung sind.

**8.** Vorrichtung nach einem der vorhergehenden Ansprüche,
**dadurch gekennzeichnet, dass**
die Tiefpassfilterung (2312) mit einer Scheitelwertbegrenzung einhergeht.

**9.** Vorrichtung der GPS-Art, nach einem der vorhergehenden Ansprüche,
**dadurch gekennzeichnet, dass**
bei der Approximation des Codes, welcher der Code P ist, und des realen Codes, welcher der Code P(Y) ist, die Grenzfrequenz der Tiefpassfilterung (2312) ca. 250 kHz beträgt.

**10.** Vorrichtung der GPS-Art, nach einem der vorhergehenden Ansprüche,
**dadurch gekennzeichnet, dass**
die Differenz zwischen der Approximation (P) des Codes und dem realen Code P(Y) ein Interferenzcode (W) mit zumindest annähernd bekanntem Takt ist, wobei der Takt der Wiederabtastung (2313) mindestens zweimal höher ist als der Takt dieses Interferenzcodes (W).

**11.** Vorrichtung nach einem der vorhergehenden Ansprüche,
**dadurch gekennzeichnet, dass**
die Quadraturtransformationseinrichtungen (2315) dazu eingerichtet sind, selektiv jeden der Punkt- und Differentialausgänge der Korrelationseinrichtungen (IA1, QA1; IB1, QB1; IA2, QA2; IB2, QB2) mit einem der beiden Punktausgänge zu multiplizieren.

**12.** Vorrichtung nach Anspruch 11 in Kombination mit Anspruch 2,
**dadurch gekennzeichnet, dass**
die Quadraturtransformationseinrichtungen (2315) dazu eingerichtet sind, selektiv jeden der Punkt- und Differentialausgänge der Korrelationseinrichtungen (IA1, QA1; IB1, QB1; IA2, QA2; IB2, QB2) mit dem Punktausgang zu multiplizieren, der sich auf die erste Trägerwelle (IA1, QA1) bezieht.

**13.** Vorrichtung nach einem der vorhergehenden Ansprüche,
**dadurch gekennzeichnet, dass**
die Hochfrequenzempfangseinrichtungen als zwei ähnliche Bauteile (10-1, 10-2) eingerichtet sind, die für die erste bzw. zweite Trägerwelle arbeiten.

**14.** Vorrichtung nach Anspruch 13 in Kombination mit Anspruch 2,
**dadurch gekennzeichnet, dass**
sie eine Vielzahl koinzidenter Verarbeitungsbauteile (230) umfasst, die mit den beiden Hochfrequenzverarbeitungsbauteilen verbunden und für den Code (P(Y)) gleichzeitig bei der ersten und der zweiten Trägerwelle, aber für unterschiedliche Satelliten verwendet werden, wobei jedes Bauteil seine eigenen Generatoren für Repliken und Trägerwellenabbildungen, seine eigenen Korrelationseinrichtungen und seine eigenen Quadraturtransformationseinrichtungen umfasst,
und dass eine Vielzahl weiterer koinzidenter Verarbeitungsbauteile (30) vorgesehen ist, die mit einem der beiden Hochfrequenzverarbeitungsbauteile verbunden sind und für die erste Trägerwelle und den anderen Code (C/A) für unterschiedliche Satelliten verwendet werden.

**15.** Vorrichtung nach einem der vorhergehenden Ansprüche,
**dadurch gekennzeichnet, dass**
die Aufbereitungseinrichtungen (99) dazu eingerichtet sind, ständig alle Messwerte zu verwenden, die an der Gesamtheit der Codes und der Trägerwellen der bearbeiteten Satelliten zu beobachten sind.

**Claims**

1. Radio navigation receiving device, of the type comprising:

   - high-frequency receiving means (10) for receiving radio navigation signals with two carrier waves (L1, L2), modulated by phase inversion by a pseudo-random code (P(Y)), and for supplying two numeric outputs (L1, L2), respectively for the two carrier waves,
   - a generator (2080) of first and second replicas (REP_L1 P/D; REP_L2P/D) of a code (P) corresponding at least in part to the code (P(Y)),
   - a generator (2700) of local images of these two carrier waves,
   - correlation means (2311) for effecting punctual and differential correlations, on the one hand (IA1, - QA1, QTA1; IB1, QB1) between the first numeric output (L1) and the first code replicas (REP_L1P/D) and on the other hand (IA2, QA2; IB2, QB2) between the second numeric output (L2) and the second code replicas (REP_L2P/D),
   - means (2315) of drawing up quadratic transforms (L1PI/Q;L2PI/Q; L1DI/Q; L2DI/Q) of the punctual outputs (IA1, QA1, QTA1; IA2, QA2) and differential outputs (IB1, QB1; IB2, QB2) of the correlation means, and
   - processing means (99) for triggering the first and second code replicas (REP _L1P/D; REP_L2P/D) according to the differential quadratic outputs (L1DI/Q;L2DI/Q) respectively, in order to trigger also the images of the two carrier waves (271 L1, 271 L2) according to the punctual quadratic outputs (L1 PI/Q; L2P1/Q) respectively, as well as in order to use the time data generated by these triggers in order to determine the position of the receiver,

   **characterised in that** it comprises, between each of the correlations (2311) and the means (2315) of quadratic transformation a numeric low-pass filter (2312), followed by re-sampling (2313) forming an over-sampling of the difference (W) between the actual code (P(Y)) and the base code of the first and second replicas, whereas the first and second replicas are generated from one and the same local oscillator.

2. Device according to claim 1, wherein the first of the carrier waves is further modulated by phase inversion by another pseudo-random code (C/A) that is shorter, **characterised in that** it comprises a generator (81, 85, 89) of replicas of this other code (CODE A, B, C), a generator (71) of a local image of the first carrier wave, as well as other correlation means (311, 312) contrived to carry out punctual and differential correlations of the first numeric output (L1) with replicas of this other code (C/A), and **in that** the processing means (99) are contrived to trigger first the replicas of this other code according to the differential correlation as well as the image of the first carrier wave according to the punctual correlation, in order to pre-position the triggers of the first and second code replicas.

3. Device according to one of claims 1 to 2, **characterised in that** the two image generators of the first carrier wave are entirely separate (71; 2700).

4. Device according to one of the preceding claims, **characterised in that** the low-pass filter (2312) is formed by a numeric filter set to about 25 MHz, followed by the re-sampling (2313) at the rate of about 10 times less.

5. Device according to one of the preceding claims, **characterised in that** the quadratic transformation means (2315) comprise numeric integration (2319) as an output.

6. Device according to one of the preceding claims, **characterised in that** the low-pass filter (2312) is formed by a recursive numeric filter.

7. Device according to claim 6, **characterised in that** the filter has as a recurrent equation:

$$y_n = y_{n-1} + k (x_n - y_{n-1})$$

   Where $x_n$, $y_{n-1}$ and $y_n$ are respectively the sample of an input in progress, the preceding output sample and the updated output sample.

8. Device according to one of the preceding claims, **characterised in that** the low-pass filter (2312) is accompanied by levelling.

9. Device according to one of the preceding claims, of the GPS type, **characterised in that**, as the estimate of the code is the code P, and the actual code is the code (P(Y)), the cut-out frequency of the low-pass filter (2312) is about 250 kHz.

10. Device according to one of the preceding claims, of the GPS type, **characterised in that** as the difference between the estimate (P) of the code and the actual code (P(Y)) is a scrambling code (W) of at least approximately known frequency, the frequency of the re-sampling (2313) is at least twice as high as the frequency of the scrambling code (W).

11. Device according to one of the preceding claims, **characterised in that** the means of quadratic transformation (2315) are contrived to multiply selectively each of the punctual and differential outputs of the correlation means (IA1, QA1; IB1, QB1; IA2, QA2; IB2, QB2) by one of the two punctual outputs.

12. Device according to claim 11, in combination with claim 2, **characterised in that** the quadratic transformation means (2315) are contrived to multiply selectively each of the punctual and differential outputs of the correlation means (IA1, QA1; IB1, QB1; IA2, QA2; IB2, QB2) by the punctual output relative to the first carrier wave (IA1, QA1).

13. Device according to one of the preceding claims, **characterised in that** the high-frequency reception means are contrived in two similar units (10-1, 10-2) operating respectively for the first carrier wave and the second carrier wave.

14. Device according to claim 13, in combination with claim 2, **characterised in that** it comprises a plurality of coincident processing units (230) connected to the two high-frequency processing units and dedicated to the said code (P(Y}) both for the first carrier wave and the second carrier wave, but for different satellites, each unit comprising its replica generators and carrier wave image generators, its correlation means, and its quadratic transformation means, and **in that** a plurality of other coincident processing units (30) are provided, connected to one of the two high-frequency processing units, and dedicated to the first carrier wave and the other code (C/A) for different satellites.

15. Device according to one of the preceding claims, **characterised in that** the exploitation means (99) are contrived to use permanently the set of measures observable over the entirety of the codes and carrier waves of the satellites being processed.

FIG.1

FIG.2

EP 0 921 409 B1

FIG. 3

FIG. 4

FIG.5

FIG.6

FIG.7

FIG.8

EP 0 921 409 B1

FIG.9

FIG.10

FIG.11

FIG.12 A

FIG.12 B